# DEMANDE DE BREVET EUROPEEN

(11) **EP 3 406 429 A1**
(43) Date de publication de la demande: **28.11.2018**
(21) Numéro de dépôt: 18170057.6
(22) Date de dépôt: 30.04.2018
(51) Int. Cl.: B29C 70/38, B29C 70/54

(54) **MODULE DE DECOUPE POUR UNE TETE DE PLACEMENT D'UN RUBAN DE FIBRES IMPREGNEES, TETE DE PLACEMENT ET DISPOSITIF DE PLACEMENT D'UN TEL RUBAN DE FIBRES**

(30) Priorité: 23.05.2017 FR 1770522
(71) Demandeur: Airbus Helicopters, 13725 Marignane Cedex (FR)
(72) Inventeur: AMARI, André, 60520 LA CHAPELLE EN SERVAL (FR)
(74) Mandataire: GPI & Associés

(57) **Abrégé**

La présente invention concerne un module de découpe (50) ledit module de découpe (50) comprenant une lame (57) et une face martyre (60). La lame (57) et ladite face martyre (60) sont en regard l'une de l'autre selon une direction de coupe (D1), ladite lame (57) et ladite face martyre (60) étant agencée de part et d'autre et à distance d'un plan de passage (P1) d'un ruban à couper, ledit ensemble coupant (55) et ladite face martyre (60) étant mobiles en translation selon la direction de coupe (D1) et selon respectivement deux sens de coupe (101, 102) opposés pour couper le ruban de fibres imprégnées d'une matrice dans le plan de passage (P1) lors d'une phase de coupe, ledit ensemble coupant (55) et ladite face martyre (60) étant mobiles en translation selon la direction de coupe (D1) et selon respectivement deux sens de retour opposés pour s'éloigner dudit plan de passage (P1) suite à ladite la coupe.

## Description

La présente invention concerne un module de découpe pour une tête de placement d'un ruban de fibres imprégnées, une telle tête de placement et un dispositif de placement d'un tel ruban de fibres imprégnées. L'invention se situe alors dans le domaine technique de la fabrication de pièces en matériaux composites à l'aide d'un ruban de fibres imprégnées par la méthode de placement de fibres.

La méthode du placement de fibres est une méthode alternative au bobinage d'un filament continu.

Le placement de fibres est un procédé de dépose de fibres sur des surfaces de formes diverses. Par exemple, un ruban de fibres de verre, carbone ou autres, imprégnées d'une résine époxy ou équivalente non réticulée est utilisé.

Le placement de fibres est réalisé en mettant en oeuvre un dispositif pourvu d'une tête de placement mobile. La tête de placement comporte une bobine autour de laquelle est enroulé un ruban de plusieurs dizaines de mètres, à savoir de trente mètres par exemple.

La tête de placement assure donc le positionnement de tronçons du ruban utilisé sur un support par contact mécanique direct sur ce support. A cet effet, la tête de placement est animée par un système de déplacement, de type robot ou portique de positionnement, dont les degrés de liberté sont asservis suivant la géométrie du support à couvrir.

En particulier, la tête de placement permet de réaliser automatiquement des séquences de dépose de rubans. Chaque séquence inclut des opérations d'amorçage, de dépose, et de découpe.

Durant la phase d'amorçage, le ruban de fibres est conduit vers le support à couvrir. Durant la phase de dépose, un tronçon du ruban de fibres est déposé sur ce support par contact mécanique direct.

Durant la phase de découpe, le ruban de fibres est alors découpé pour que le tronçon déposé présente la longueur requise.

Dès lors, une tête de placement comporte usuellement un module de découpe pour découper le ruban. L'agencement d'un module de découpe au sein d'une tête de placement peut s'avérer délicat.

De plus, certains modules de découpe tendent à déformer la géométrie du ruban et/ou à modifier la trajectoire suivie par le ruban lors de la découpe.

Le document US6540000 présente une tête de placement. Cette tête de placement est munie d'un galet de dépose qui est mobile en élévation par rapport à une platine. La tête de placement comporte un module de découpe. Ce module de découpe est pourvu d'une enclume vibrante montée fixe, et d'un organe de coupe escamotable. L'organe de coupe comporte un bras qui est mobile en rotation par rapport à un axe de rotation du galet de dépose, ce bras portant une lame.

Ce dispositif nécessite un volume de fonctionnement important pour permettre la rotation de la lame.

Le document US2010/0139467 est éloigné du domaine de l'invention, et des problèmes précités en ayant trait à un dispositif à convoyeurs et non pas à une tête de placement. Ce dispositif à convoyeurs comporte un convoyeur d'acheminement suivi d'un convoyeur de décharge. Un module de découpe comporte un organe supérieur mobile en rotation et pourvu d'une roulette, ainsi qu'une lame mobile en translation.

Selon le document US2010/0139467, une bande est alors déplacée sur le convoyeur d'acheminement par un système de déplacement. Ce système de déplacement est muni d'une poutre magnétique. Au niveau d'une extrémité, le convoyeur d'acheminement coopère avec un moyen de pré-tension à ressort.

En opération, la bande est déplacée sur le convoyeur d'acheminement puis sur le convoyeur de décharge. L'organe supérieur pivote vers le bas pour appuyer la roulette sur la bande en comprimant le ressort pour déplacer le convoyeur d'acheminement vers le bas. La bande est alors localement déformée en ayant une forme en V. La lame est ensuite déplacée en translation pour couper la bande, au niveau de la forme en V.

Le module de découpe du document US2010/0139467 présente donc l'inconvénient de déplacer et de déformer la bande lors de la coupe.

Le document US9010224 est éloigné du domaine de l'invention. Ce document US9010224 décrit un système de découpe d'une feuille à lames rotatives. Un tel système parait difficilement compatible avec une tête de placement de fibres.

De même, le document US 2011/0232447 est éloigné du domaine de l'invention en étant relatif à un système de découpe pour couper un système de conditionnement à coques dit « blister » en langue anglaise. Ce système de découpe comporte une lame mobile en translation pour couper le système de conditionnement en étant en appui contre une face de contact.

Le document EP 1922209 présente un module de découpe comprenant une lame mobile.

Le document US 4356054 présente un module de découpe comprenant une lame et une contre lame.

Le document EP 0846551 est aussi connu.

Dans ce contexte, un module de découpe peut tendre à déplacer une bande lors de sa découpe selon diverses directions ce qui peut tendre à déformer la bande. Certains modules de découpe peuvent aussi occuper un espace important.

La présente invention a alors pour objet de proposer un module de découpe pour tendre à couper de manière fiable un ruban, et notamment un ruban de matériaux composites non réticulés.

L'invention vise un module de découpe apte à découper un ruban de fibres imprégnées d'une matrice, ce module de découpe comprenant un ensemble coupant muni d'une lame, cet ensemble coupant étant mobile en translation selon une direction de coupe, le module de découpe comprenant une face « martyre ».

La lame et la face martyre sont en regard l'une de l'autre selon la direction de coupe, la lame et la face martyre étant agencées de part et d'autre et à distance d'un plan de passage, le plan de passage étant destiné à/configuré pour contenir le ruban lors d'une opération de dépose du ruban, ledit ensemble coupant et ladite face martyre étant conjointement ou alternativement mobiles en translation selon la direction de coupe et selon respectivement deux sens dit « sens de coupe » opposés voire coplanaires en étant configurées pour entrer en contact et/ou pour couper le ruban de fibres imprégnées d'une matrice dans le plan de passage lors d'une phase de coupe, ledit ensemble coupant et ladite face martyre étant conjointement ou alternativement mobiles en translation selon la direction de coupe et selon respectivement deux sens dit « sens de retour » opposés voire coplanaires pour s'éloigner dudit plan de passage suite à ladite la coupe.

Le terme « lame » désigne un organe coupant, par exemple muni d'un fil ou plus globalement d'une arête tranchante. Par exemple, l'élément coupant comporte un support de lame et une lame, la lame étant fixée de manière réversible au support de lame par des moyens usuels, par exemple de type vis/écrou, d'agrafage élastique... Ainsi, diverses lames peuvent être montées dans le module de découpe.

L'expression « face martyre » désigne une face d'un organe formant une enclume qui peut-être de divers matériaux.

L'expression « plan de passage » désigne un plan dans lequel circule le ruban lors d'une opération d'amorçage et de dépose au sein du module de découpe. Le plan de passage peut présenter la même épaisseur que l'épaisseur du ruban à couper

L'expression « pour entrer en contact et/ou pour couper le ruban de fibres imprégnées d'une matrice dans le plan de passage lors d'une phase de coupe » signifie que l'interface entre la lame et la face martyre est dans ou contre le plan de passage lors de la coupe.

Dès lors, le module de découpe est notamment destiné à découper un ruban de fibres imprégnées d'une matrice.

Ce module de découpe permet de disposer de part et d'autre du ruban à couper une lame et la face martyre qui sert d'enclume. Par exemple, la lame comporte un fil tranchant ou une arête tranchante parallèle à la face martyre.

En outre, l'ensemble coupant, et donc la lame, ainsi que la face martyre sont tous deux mobiles en translation selon la direction de coupe. Par exemple, suite à une consigne de découpe la lame descend vers le ruban selon un premier sens de coupe vers le bas. De plus, la face martyre monte vers le ruban selon un deuxième sens de coupe vers le haut pour pincer et couper le ruban dans son plan de passage. Ainsi, le module de découpe tend à ne pas modifier la géométrie du ruban et sa position lors de la coupe. Le module de découpe peut ainsi rendre fiable une découpe d'un ruban en matériaux composites non réticulés.

Par exemple, la lame est poussée contre une face supérieure du ruban relativement non pégueuse, alors que la face martyre est poussée contre une face inférieure du ruban relativement pégueuse. La lame traverse alors le ruban pour le couper et atteindre la face martyre.

Après un temps donné court, de l'ordre de quelques dixièmes de seconde, la lame et la face martyre s'éloignent assez rapidement du ruban respectivement selon un premier sens de retour vers le haut et un deuxième sens de retour vers le bas pour tendre à éviter une adhésion du ruban contre le module de découpe en raison de la pégosité de ce ruban, le choix du matériau du support martyre étant choisi par son pouvoir de non adhérence. Le ruban est donc coupé et tend à rester dans son plan de passage.

Le module de découpe peut comprendre une ou plusieurs des caractéristiques qui suivent.

En dehors d'une dite phase de coupe, une distance sépare selon ladite direction de coupe ladite lame et ladite face martyre, ledit plan de passage passant au travers d'un espace séparant ladite lame et ladite face martyre, ladite distance pouvant être supérieure ou égale à un centimètre, et par exemple comprise entre un et trois centimètres et notamment égale à deux centimètres. Cette distance peut résulter de la course d'un actionneur qui déplace l'ensemble coupant et la face martyre, cet actionneur pouvant être dimensionné en fonction du type de ruban à couper et de l'encombrement d'un système d'amorçage.

La distance entre la face martyre et la lame, et notamment son arête tranchante, peut être assez importante. Une telle distance importante peut permettre un passage aisé du ruban seul, et éventuellement le passage d'un équipement mobile d'une tête de placement.

Selon un aspect, le module de découpe peut comporter un système de déplacement pour déplacer l'ensemble coupant et la face martyre selon lesdits sens de coupe et lesdits sens de retour.

Selon une première réalisation, l'ensemble coupant et la face martyre formant respectivement deux éléments mis en mouvement par le système de déplacement, le système de déplacement peut comporter un dispositif à crémaillère, le dispositif à crémaillère comprenant une roue dentée en prise sur une barre dentée, le dispositif à crémaillère comprenant un actionneur pour mettre en mouvement la roue dentée et la barre dentée, un desdits éléments étant solidaire en translation de la roue dentée et un desdits éléments étant solidaire en translation de la barre dentée.

Le terme actionneur sans autre précision peut désigner par la suite un actionneur linéaire ou rotatif, un moteur électrique, un vérin électrique, un vérin hydraulique, un vérin pneumatique....

Un seul actionneur peut déplacer la face martyre et la lame grâce au dispositif à crémaillère. Le roulement de la roue dentée sur la barre ou le glissement de la barre par rapport à la roue dentée induit de fait le mouvement de la lame et de la face martyre.

Selon une deuxième réalisation, le système de déplacement comporte deux actionneurs, un desdits deux actionneurs déplaçant en translation selon la direction de coupe uniquement ledit ensemble coupant, un desdits deux actionneurs déplaçant en translation selon la direction de coupe uniquement la face martyre.

Cette deuxième réalisation est relativement simple mais implique deux actionneurs ce qui peut engendrer un encombrement plus important.

Selon une troisième réalisation, l'ensemble coupant et la face martyre formant respectivement deux éléments mis en mouvement par le système de déplacement, le système de déplacement comporte un système à poulie et un actionneur, un desdits éléments dénommé « élément actif » étant mobile en translation selon la direction de coupe sous l'action dudit actionneur et l'autre élément étant dénommé « élément passif », le système à poulie comprenant un premier renvoi et un deuxième renvoi immobiles en translation notamment dans le référentiel du module de découpe disposés latéralement de part et d'autre d'un plan qui est orthogonal au plan de passage et qui passe par l'élément actif, le système à poulie comprenant au moins une poulie mobile qui est mobile en translation selon la direction de coupe et solidaire en translation notamment dans ledit référentiel selon la direction de coupe de l'élément passif, le système à poulie comprenant une courroie, ladite courroie passant successivement autour du premier renvoi puis autour de chacune dite au moins une poulie puis autour du deuxième renvoi pour rejoindre une portion solidaire en translation de l'élément actif, ledit élément passif étant agencé entre ladite courroie et ledit plan de passage pour qu'une translation de l'élément actif induise un déplacement de ladite courroie générant une translation de l'élément passif.

Un seul actionneur peut déplacer la face martyre et la lame.

Selon une quatrième réalisation, ledit ensemble coupant et ladite face martyre formant respectivement deux éléments mis en mouvement par le système de déplacement, ledit module de découpe comprenant un support immobile et un support mobile qui est mobile en translation notamment dans ledit référentiel selon la direction de coupe par rapport au support immobile, ledit support mobile comprenant un cadre s'étendant selon la direction de coupe d'un fond jusqu'à une platine supérieure, ledit fond comprenant un desdits éléments dit « élément inférieur » et l'autre élément étant dit « élément supérieur », ledit élément supérieur étant mobile en translation selon la direction de coupe par rapport au support mobile et étant agencé entre ledit fond et la platine supérieure, ledit système de déplacement comportant un unique actionneur qui présente une longueur variant entre une position étendue et une position rétractée, ledit actionneur étant fixé à la platine supérieure et à l'élément supérieur pour qu'une extension dudit actionneur de la position rétractée vers la position étendue induise un déplacement de la lame et de la face martyre selon lesdits sens de coupe et pour qu'une rétraction dudit actionneur de la position étendue vers la position rétractée induise un déplacement de la lame et de la face martyre selon lesdits sens de retour.

Un seul actionneur peut déplacer la face martyre et la lame. Cet actionneur déplace en effet le support mobile, et donc l'élément passif, ainsi que l'élément actif.

Cette réalisation s'avère relativement simple et compacte.

Selon un aspect, le module de découpe peut comporter un moyen de guidage guidant une translation du support mobile par rapport au support immobile.

Par exemple, le moyen de guidage peut comprendre une rainure du support mobile accueillant un rail ou un doigt du support immobile. De manière alternative, un rail ou un doigt du support mobile est logé dans une rainure du support immobile.

Selon un aspect, le module de découpe peut comporter un système de guidage guidant une translation de l'élément supérieur par rapport au support mobile.

Par exemple, le système de guidage peut comprendre une rainure du support mobile accueillant un rail ou un doigt de l'élément supérieur. De manière alternative, un rail ou un doigt du support mobile est logé dans une rainure de l'élément supérieur.

Selon un aspect, le support immobile peut comporter une butée supérieure, ledit élément supérieur étant en butée contre ladite butée supérieure lorsque ledit actionneur est dans ladite position rétractée.

Selon un aspect, le support immobile comporte une butée inférieure, ledit élément supérieur étant en butée contre ladite butée inférieure lorsque ledit actionneur est dans ladite position étendue.

Une telle butée inférieure représente une butée de fin de course en translation de l'élément actif visant à positionner précisément cet élément actif dans le plan de passage du ruban.

Selon un aspect, le module de découpe peut comporter au moins un ressort agencé entre la platine supérieure et le support immobile.

Par exemple, un ou plusieurs ressorts de compression sont disposés entre le support immobile et le support mobile de façon à assurer un effort d'écartement entre le support immobile et le support mobile.

Indépendamment de la réalisation, le module de découpe peut comporter un guide solidaire de la face martyre pour positionner transversalement le ruban lors de la coupe selon une direction transversale orthogonale à la direction de coupe.

Par exemple, un tel guide comporte au moins une face inclinée aboutissant sur la face martyre pour permettre le recentrage du ruban quelle que soit la position de la tête de placement.

Le guide permet de canaliser et de calibrer le ruban découpé quelle que soit la nature du ou des matériaux de ce ruban.

Selon un aspect, le guide peut comporter au moins une fente, la lame coulissant dans la fente.

Une telle fente permet de guide la lame.

Indépendamment de la réalisation, le module de découpe peut comporter une buse soufflant un fluide sous le ruban, ce fluide pouvant présenter une température tempérée et éventuellement contrôlée.

Une buse par exemple pilotée en pression peut diriger un fluide sur le ruban. Le fluide est par exemple de l'air.

Eventuellement, la buse est placée sous le ruban pour souffler un fluide sur une face pégueuse du ruban afin de limiter le pouvoir d'adhésion de l'extrémité coupée du ruban sur la face martyre, et/ou pour maintenir l'extrémité coupée du ruban en sustentation pendant les phases d'arrêt de la tête de placement.

Outre un module de découpe, l'invention vise une tête de placement destinée à placer un ruban de fibres imprégnées d'une matrice sur un support. Cette tête de placement peut être d'un type connu.

En outre, la tête de placement comporte un module de découpe selon l'invention.

De même, un système de placement peut être muni d'une tête de placement selon l'invention, d'un dispositif de déplacement destiné à déplacer la tête de placement et d'un moyen de contrôle qui contrôle le dispositif de déplacement et la tête de placement.

L'invention vise de plus un procédé apte à être appliqué par le module de coupe de l'invention.

Ce procédé vise à découper un ruban de fibres imprégnées d'une matrice suite à une opération de dépose dudit ruban sur un support. Ce procédé comporte les étapes de :
- déplacement, conjointement ou alternativement, d'une lame et d'une face martyre selon deux sens de coupe opposés pour atteindre un plan de passage, ledit ruban étant agencé dans ledit plan de passage durant l'opération de dépose,
- coupe du ruban dans ledit plan de passage par ladite lame et ladite face martyre,
- déplacement, conjointement ou alternativement, de ladite lame et de la face martyre selon deux sens de retour opposés pour s'éloigner dudit plan de passage

En particulier, la lame peut être poussée vers une face supérieure du ruban relativement non pégueuse, alors que la face martyre est poussée contre une face inférieure du ruban relativement pégueuse.

L'invention et ses avantages apparaîtront avec plus de détails dans le cadre de la description qui suit avec des exemples donnés à titre illustratif en référence aux figures annexées qui représentent :
- les figures 1 à 6, des vues de modules de découpe selon l'invention,
- la figure 7, une vue d'une tête de placement munie d'un tel module de découpe, et
- la figure 8, une vue d'une telle tête de placement agencée au sein d'un système de placement.

Les éléments présents dans plusieurs figures distinctes sont affectés d'une seule et même référence.

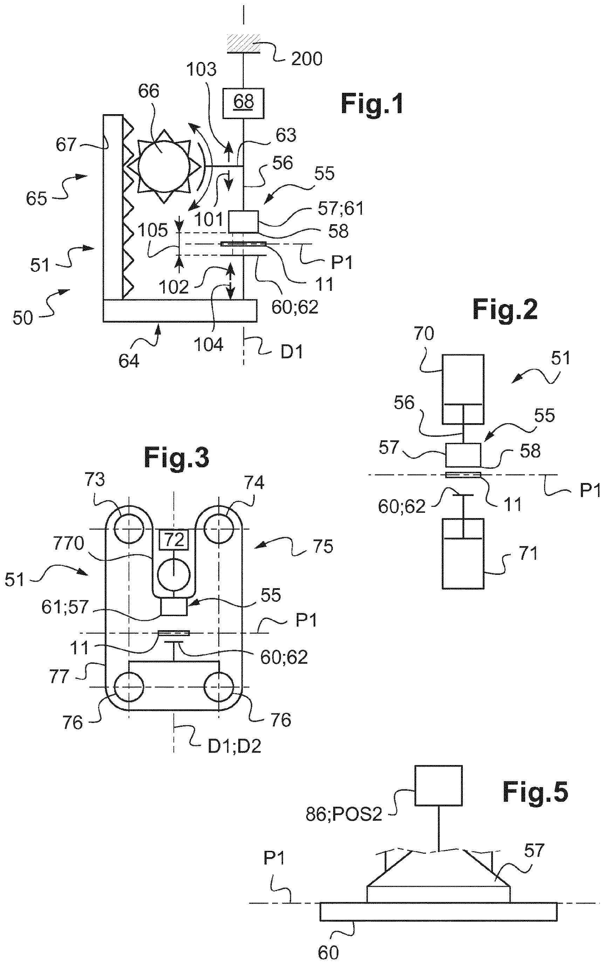

Les figures 1 à 6 illustrent des modules de découpe selon l'invention.

En référence à la figure 1 et indépendamment de la réalisation, le module de découpe 50 est notamment utilisé pour couper un ruban 11, par exemple au sein d'une tête de placement d'un ruban de fibres. Ce ruban 11 évolue toujours dans un plan dénommé plan de passage P1 au niveau du module de découpe. Le module de découpe permet de couper le ruban dans son plan de passage P1, et donc sans le dévier et le déformer.

Par suite, le module de découpe 50 comprend un ensemble coupant 55. Cet ensemble coupant 55 est muni d'une lame 57, et éventuellement d'un support de lame 56 portant la lame 57. La lame 57 peut comprendre un bord tranchant, par exemple sous la forme d'un fil ou d'une arête tranchante.

En outre, le module de découpe 50 comprend une cale dite « face martyre 60 ».

La lame 57 et la face martyre 60 sont par exemple en regard l'une de l'autre selon une direction de coupe D1, éventuellement orthogonale au plan de passage P1. L'expression « en regard l'une de l'autre » signifie que la lame 57 et la face martyre 60 sont positionnées l'une en face de l'autre selon la direction de coupe D1 en l'absence d'un objet disposé entre la lame 57 et la face martyre. Un plan passant par la direction de coupe, et éventuellement orthogonal au plan de passage, passe donc par la lame 57 et la face martyre 60.

Par exemple, le bord tranchant 58 de la lame 57 est parallèle à la face martyre 60, même en dehors d'une phase de découpe. De plus, le bord tranchant 58 et la face martyre 60 peuvent être orthogonaux à la direction de coupe.

Par ailleurs, la lame 57 et la face martyre 60 sont agencées de part et d'autre et à distance du plan de passage P1. Le plan de passage P1 traverse alors un espace séparant la lame 57 et ladite face martyre 60. Par exemple, en dehors d'une phase de coupe, la lame 57 et la face martyre 60 sont agencées de manière équidistante de part et d'autre du plan de passage P1.

Une distance 105 sépare selon la direction de coupe D1 la lame 57 et la face martyre 60. Cette distance 105 peut être supérieure ou égale à un centimètre par exemple.

Selon un autre aspect, l'ensemble coupant 55 et la face martyre 60 sont mobiles en translation selon la direction de coupe D1, et éventuellement uniquement en translation, selon respectivement deux sens dit « sens de coupe 101, 102 » opposés et selon respectivement deux sens dit « sens de retour 103, 104 » opposés. Par exemple, l'ensemble coupant 55 et la face martyre 60 se déplacent en translation conjointement, ou alternativement à savoir l'un après l'autre.

Pour couper le ruban, l'ensemble coupant se déplace selon un premier sens de coupe 101 vers le ruban, et la face martyre se déplace vers le ruban selon un deuxième sens de coupe 102 qui est opposé au premier sens de coupe 101. Le premier sens de coupe 101 et le deuxième sens de coupe 102 sont par exemple coplanaires. L'ensemble coupant 55 et la face martyre 60 se rejoignent, éventuellement dans le plan de passage, pour couper le ruban dans ce plan de passage.

Eventuellement, le module de découpe peut comporter au moins une butée pour stopper la translation de l'ensemble coupant et/ou de la face martyre lorsque le plan de passage est atteint.

Lorsque la coupe est effectuée, l'ensemble coupant se déplace selon un premier sens de retour 103, et la face martyre se déplace selon un deuxième sens de retour 104 opposé au premier sens de retour 103. Le premier sens de retour 103et le deuxième sens de retour 104 sont par exemple coplanaires. L'ensemble coupant 55 et la face martyre 60 s'éloignent du plan de passage selon deux sens opposés.

Par ailleurs, le module de découpe peut comporter une buse soufflant un fluide sur le ruban.

Le fluide soufflé sur le ruban en particulier pendant la phase d'amorçage et de dépose peut jouer un rôle important sur la résine du ruban déposé, en la rendant plus ou moins collante en fonction de la température du fluide.

Par ailleurs, le module de découpe peut comporter au moins un système pour guider le déplacement de l'ensemble coupant et/ou le déplacement de la face martyre.

En outre, le module de découpe 50 peut comporter un système de déplacement 51 pour déplacer en translation l'ensemble coupant 55 et la face martyre 60 selon les sens de coupe 101, 102 et les sens de retour 103, 104. L'ensemble coupant 55 et ladite face martyre 60 forment respectivement deux éléments 61, 62 mis en mouvement par le système de déplacement. Le terme élément fait alors référence à l'ensemble coupant 55 et à la face martyre 60.

La figure 1 illustre un premier mode de réalisation. Selon ce premier mode de réalisation, le système de déplacement comporte un dispositif à crémaillère 65.

Le dispositif à crémaillère 65 est muni d'une roue dentée 66 en prise sur une barre dentée 67. Un desdits éléments 61 est solidaire en translation de la roue dentée 66 au travers d'une première liaison mécanique 63 et l'autre élément 62 est solidaire en translation de la barre dentée 67 au travers d'une deuxième liaison mécanique 64. Par exemple, la première liaison mécanique 63 comporte un moyen de roulement disposé autour d'un arbre solidaire de la roue dentée, le moyen de roulement étant solidaire d'un élément. La deuxième liaison mécanique 64 peut comporter au moins une tige reliant la barre dentée 67 à l'élément correspondant.

Selon l'exemple schématisé, l'ensemble coupant représente l'élément solidaire en translation de la roue dentée 66, et la face martyre 60 représente l'élément solidaire de la barre dentée 67. L'inverse est envisageable.

En outre le système de déplacement comporte un actionneur 68 mettant en mouvement directement ou indirectement soit la roue dentée 66 soit la barre dentée 67.

Selon l'exemple représenté, l'actionneur 68 est un actionneur linéaire agissant sur l'ensemble coupant, lui-même solidaire en translation de la roue dentée 66. Cet actionneur est en outre fixé à un élément immobile 200. Dès lors, lorsque l'actionneur 68 s'étire, l'ensemble coupant 55 se rapproche du plan de passage P1. Conjointement la roue dentée 66 effectue une rotation sur son axe de rotation et provoque un déplacement de la barre dentée 67. La face martyre 60 se rapproche alors du plan de passage P1.

Selon le deuxième mode de réalisation de la figure 2, le système de déplacement comporte deux actionneurs 70, 71. Un premier actionneur 70 est relié à l'ensemble coupant 55 pour déplacer en translation selon la direction de coupe D1 uniquement ledit ensemble coupant 55. Un deuxième actionneur 71 est relié à la face martyre 60 pour déplacer en translation selon la direction de coupe D1 uniquement la face martyre 60.

Selon le troisième mode de réalisation de la figure 3, le système de déplacement comporte un système à poulie 75 et un unique actionneur 72.

Dans un souci de clarification, un desdits éléments est dénommé « élément actif 61 » et l'autre élément est dénommé « élément passif 62 » par commodité. Selon l'exemple représenté, l'élément actif 61 est l'ensemble coupant, l'élément passif 62 étant la face martyre. L'inverse est possible.

Dès lors, l'actionneur 72 est relié à l'élément actif 61 pour déplacer cet élément actif en translation selon la direction de coupe D1. Par exemple, l'actionneur 72 est relié à une poulie intermédiaire solidaire en translation de l'élément actif 61, et déplace cet élément actif 61 via la poulie intermédiaire.

Le système à poulie 75 possède par ailleurs un premier renvoi 73 et un deuxième renvoi 74 qui sont immobiles en translation. Le premier renvoi 73 et le deuxième renvoi 74 sont disposés latéralement de part et d'autre d'un plan vertical P2. Le plan vertical P2 est orthogonal au plan de passage P1 et passe par l'élément actif 61. Par exemple, le premier renvoi 73 et le deuxième renvoi 74 prennent la forme respectivement de deux poulies.

De plus, le système à poulie 75 possède au moins une poulie mobile 76, et par exemple deux poulies mobiles 76 selon la variante représentée. Chaque poulie mobile est mobile en translation selon la direction de coupe D1, de bas en haut et haut en bas selon l'illustration de la figure 3. Par exemple, chaque poulie mobile comporte un arbre coulissant dans un rail.

En outre, chaque poulie mobile est solidaire en translation selon la direction de coupe D1 de l'élément passif 62. Par exemple, un arbre de la poulie mobile est rendu solidaire de la face martyre 60, via éventuellement un moyen de roulement.

Dès lors, le système à poulie 75 comprend une courroie 77 décrivant une ligne fermée. Cette courroie 77 passe successivement autour du premier renvoi 73 puis autour de chaque poulie mobile 76, puis autour du deuxième renvoi 74. Entre le premier moyen de renvoi et le deuxième moyen de renvoi, la courroie comporte un tronçon 770 solidaire en translation de l'élément actif 61. Par exemple, ce tronçon passe dans une poulie intermédiaire solidaire en translation de l'élément actif 61.

Par conséquent, l'élément passif 62 est agencé entre la courroie 77 et le plan de passage P1.

Dès lors, lorsque l'actionneur 72 déplace l'élément actif 61 vers le plan de passage, cet élément actif tire sur la courroie qui se déplace. La courroie exerce alors un effort sur chaque poulie mobile pour rapprocher l'élément passif du plan de passage P1. Selon l'exemple de la figure 3, les poulies mobiles 76 entrainent la translation vers le haut de l'élément passif jusqu'au plan de passage P1. Simultanément la poulie solidaire de l'élément actif 61 continue sa course en entrainant l'élément actif 61 vers le bas jusqu'au même plan de passage P1.

Inversement, lorsque l'actionneur 72 éloigne l'élément actif 61 du plan de passage, le déplacement de la courroie 77 éloigne l'élément passif 62 du plan de passage, par gravité ou encore sous l'effet d'un organe ressort par exemple.

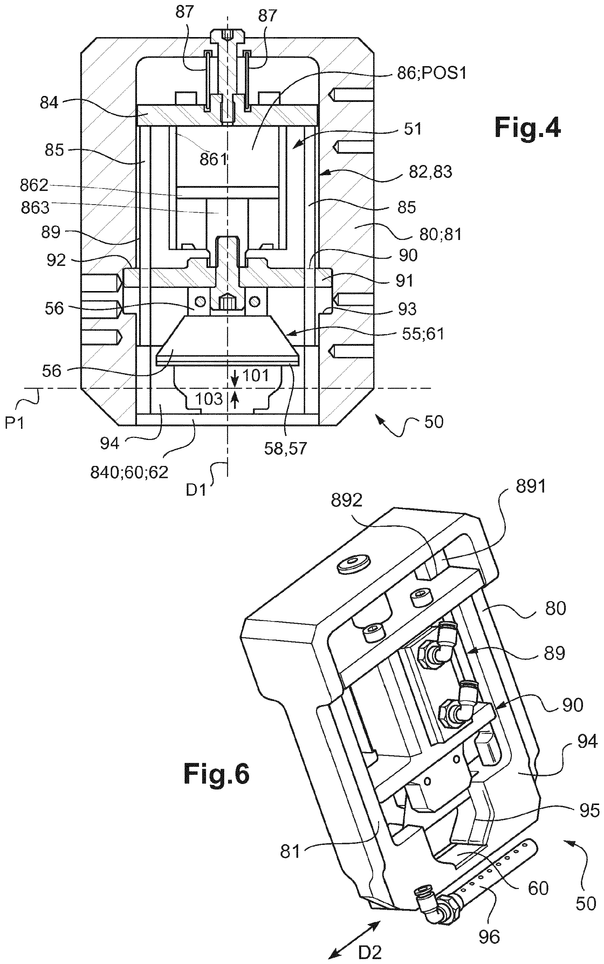

Les figures 4 à 6 illustrent un quatrième mode de réalisation.

Le module de découpe 50 comprend un support immobile 80. Ce support immobile 80 présente un cadre immobile 81, par exemple en forme de U renversé en coupe.

De plus, le module de découpe 50 comprend un support mobile 82 inscrit dans le support immobile 80. Le support mobile 82 comprend un cadre mobile 83 inscrit dans le cadre immobile 81. Le cadre mobile 83 s'étend selon la direction de coupe D1 d'un fond 840 jusqu'à une platine supérieure 84. Par exemple des bords latéraux 85 relient selon la direction de coupe D1 le fond 840 et la platine supérieure 84.

Le support mobile 82 est mobile en translation selon la direction de coupe D1 par rapport au support immobile 80. Un moyen de guidage 89 peut guider une translation du support mobile 82 par rapport au support immobile 80. La figure 6 illustre un moyen de guidage 89 comprenant un rail 891 du support immobile 80 agencé dans une rainure 892 du support mobile 82.

En outre, au moins un ressort 87 peut s'étendre de la platine supérieure 84 jusqu'au support immobile 80. Le terme « ressort » désigne un ressort en tant que tel mais aussi tout organe élastique, par exemple un bloc d'élastomère ou un organe pneumatique, fluidique... Ce ressort 87 tend à écarter le support mobile du support immobile selon la direction de coupe D1.

Par ailleurs, le fond comprend un desdits éléments dit « élément inférieur 62 » et l'autre élément étant dit « élément supérieur 61 ». Par exemple, la face martyre 60 représente l'élément inférieur qui une face du fond, l'élément supérieur comprenant l'ensemble coupant. L'inverse est possible.

L'élément supérieur 61 est en outre mobile en translation selon la direction de coupe D1 par rapport au support mobile 82, en étant agencé entre le fond et la platine supérieure 84.

Un système de guidage 90 peut guider une translation de l'élément supérieur 61 par rapport support mobile 82. Par exemple, l'élément supérieur 61 comporte un doigt 91 du système de guidage, ce système de guidage comprenant un trou oblong ménagé dans le support mobile 82, voire dans le support immobile. Le doigt 91 coulisse alors dans le trou oblong.

Le système de guidage peut interdire une rotation de l'élément supérieure 61 par rapport au support mobile. De même, le moyen de guidage peut interdire une rotation du support mobile par rapport au support immobile.

Le système de déplacement comporte un unique actionneur 86 à longueur variable. L'exemple de la figure 4 illustre un vérin pneumatique ou hydraulique mais un autre type d'actionneur à longueur variable est envisageable. L'actionneur 86 est fixé au support mobile 82, et par exemple à la platine supérieure 84. De plus, l'actionneur 86 est fixé à l'élément supérieur 61.

Par exemple, l'actionneur 86 comporte un corps 861. Un piston 862 partage un volume du corps en une chambre de rétraction et une chambre d'extension, le piston 862 étant solidaire d'une tige de puissance 863 sortant du corps 861. Par exemple, le corps 861 est fixé au support mobile 82 et la tige de puissance 863 est fixée à l'élément supérieur 61, ou inversement. Eventuellement, l'effort de coupe peut être limité par une pression pilotée dans une desdites chambres en fonction du ruban à couper.

Lorsque l'actionneur est dans la position rétractée POS1 de la figure 4, la lame est distante de la face martyre 60. A l'inverse, lorsque l'actionneur est dans une position étendue POS2 schématisée sur la figure 5, la lame est accolée à la face martyre 60 au niveau du plan de passage.

Selon un autre aspect, le support immobile 80 peut comporter une butée supérieure 92 et/ou une butée inférieure 93. Par exemple, un doigt de l'élément supérieur 61 coulisse dans un trou délimité selon la direction de coupe par la butée supérieure 92 et/ou la butée inférieure 93.

Selon un autre aspect, un guide 94 solidaire de la face martyre 60 peut positionner transversalement le ruban 11 à couper lors de la coupe.

En référence à la figure 6, un tel guide peut présenter des faces inclinées qui débouchent sur la face martyre 60.

En outre, le guide 94 peut comporter au moins une fente 95 dans laquelle coulisse la lame 57.

Par ailleurs, une buse 96 peut être utilisée pour souffler un fluide sur la lame 57.

Dès lors et en référence à la figure 4, lorsque l'actionneur 86 est commandé pour s'étirer, la lame 57 est poussée selon le premier sens de coupe 101 vers le ruban par une tige de l'actionneur, éventuellement juste en contact contre la face supérieure du ruban du fait de la butée inférieure 93. De plus, le support mobile est poussé selon le deuxième sens de coupe 102 vers le support immobile en comprimant les ressorts 87. La face martyre 60 est donc poussée contre la face inférieure du ruban en contact avec la lame 57. Le ruban est ainsi coupé dans son plan de passage P1.

Après quelques dixièmes de seconde, l'actionneur 86 est commandé pour se rétracter. Sous l'effet combiné de la rétraction de l'actionneur et des ressorts, la lame et la face martyre s'éloignent du ruban assez rapidement. La buse souffle en outre un fluide sur le ruban.

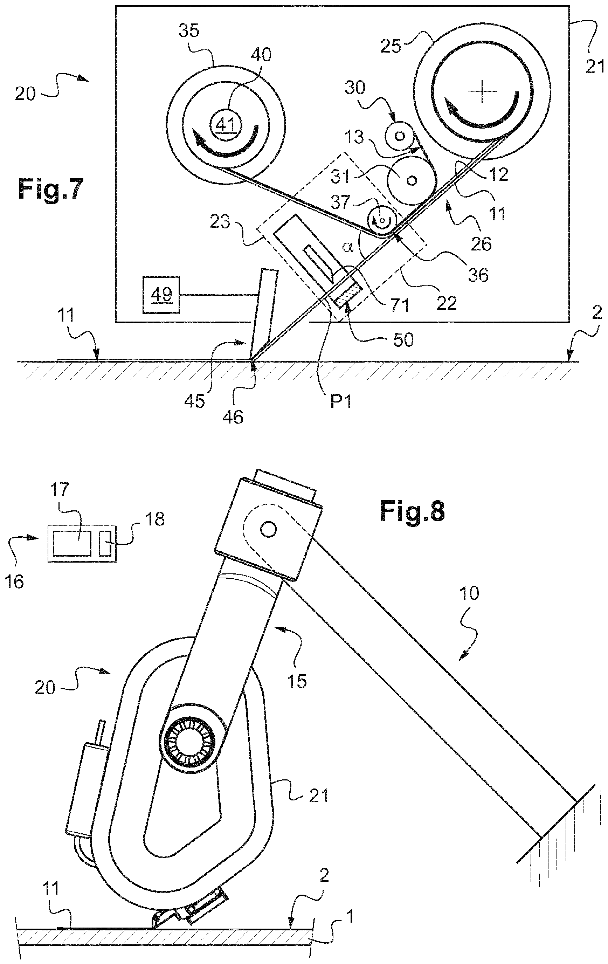

La figure 7 présente un schéma d'une réalisation de la tête de placement 20.

Cette tête de placement comprend une bobine d'alimentation 25. Un ensemble 26 comprenant un ruban de fibres imprégnées 11 superposé à un ruban séparateur 12 est alors enroulé autour d'une âme d'alimentation de cette bobine d'alimentation.

A la sortie de la bobine d'alimentation, ledit ensemble 26 est dirigé vers un moyen de désunion 36 permettant de peler cet ensemble 26. Le moyen de désunion 36 comprend un rouleau de désunion 37 guidant le ruban séparateur 12 vers une bobine de récupération 35.

Selon la variante représentée, un ruban de protection 13 enroulé autour d'une bobine 30 est de plus interposé entre le ruban séparateur 12 et le moyen de désunion 36. Le ruban de protection 13 est alors interposé entre le ruban séparateur 12 et le moyen de désunion 36 pour éviter un encrassement de ce moyen de désunion 36.

Par exemple, un rouleau d'assemblage 31 est utilisé pour apposer le ruban de protection 13 sur l'ensemble 26, le rouleau d'assemblage étant placé entre la bobine d'alimentation 25 et le moyen de désunion 36.

Le ruban de protection 13 ainsi que le ruban séparateur 12 et le ruban de fibres imprégnées 11 sont dirigés conjointement vers le moyen de désunion 36, le ruban de protection 13 et le ruban séparateur 12 étant alors guidés vers la bobine de récupération 35.

Quelle que soit la variante, le ruban de fibres imprégnées 11 n'est pas dévié, et poursuit son cheminement vers la surface 2 sur laquelle ce ruban de fibres imprégnées 11 doit être déposé.

En outre, la tête de placement 20 peut comprendre un moyen d'entraînement 40 pour mettre en mouvement chaque ruban. Par exemple, un moteur d'entraînement 41 met en rotation la bobine de récupération 35.

Le ruban séparateur 12 et le ruban de protection 13 sont donc le cas échéant entraînés par le moyen d'entraînement 40. Le ruban de fibres imprégnées 11 adhère au ruban séparateur 12 en amont du moyen de désunion 36. Ce ruban de fibres imprégnées 11 est alors mis en mouvement par le ruban séparateur 12 qui remplit de fait un rôle de ruban de traction.

Le ruban de fibres imprégnées 11 traverse un module de découpe 50 selon l'invention dans son plan de passage P1, puis est dirigé vers un lissoir 45. Un actionneur 49 peut déplacer le lissoir verticalement.

Selon un autre aspect, la tête de placement peut comporter une chambre climatique 22 alimentée par un moyen refroidissant 23 pour maintenir le ruban de fibres imprégnées 11 à une température prédéterminée. La chambre climatique peut par exemple enserrer le moyen de désunion 36 et le moyen de découpe 50.

A l'inverse, le lissoir peut comporter un moyen de chauffage, tel qu'un crayon chauffant disposé dans l'épaisseur de son corps.

Le moyen de découpe peut toutefois être agencé sur d'autres types de tête de placement. Par exemple, le moyen de découpe peut être agencé sur la tête de placement décrite dans la demande de brevet déposée le 24-mai-2016 sous le numéro 1600833 auprès de l'Institut National de la Propriété Intellectuelle en France.

La figure 8 présente un système de placement 10 pour placer un ruban de fibres sur une surface de dépose 2, telle qu'une surface d'un moule 1.

Plus particulièrement, le système de placement 10 permet de disposer un ruban de fibres imprégnées 11 sur cette surface de dépose 2. Le ruban de fibres imprégnées 11 peut comporter des fibres imprégnées par une résine par voie humide par exemple pour présenter une capacité importante d'adhérence à un support. Le ruban de fibres imprégnées 11 est alors un ruban pégueux présentant une pégosité élevée. Néanmoins, le ruban de fibres imprégnées 11 peut par exemple comporter des fibres imprégnées par une résine par voie solvant.

Ce système de placement 10 inclut une tête de placement 20 et un dispositif de déplacement 15 de la tête de placement dans l'espace. La tête de placement 20 comprend un bâti 21 porté par le dispositif de déplacement 15. Ce dispositif de déplacement 15 peut être un robot présentant des bras articulés, ou encore un portique apte à déplacer la tête de placement selon plusieurs directions.

De plus, le système de placement 10 comporte un moyen de contrôle 16 de la tête de placement 20 et du dispositif de déplacement 15.

Le moyen de contrôle peut être pourvu d'une interface visuelle 17 et d'interfaces homme/machine 18 manoeuvrables manuellement par un opérateur pour régler des paramètres de contrôle du dispositif 10. Par exemple, ces paramètres sont notamment relatifs au déplacement de la tête de placement 20, à la coupe éventuelle de ce ruban de fibres imprégnées 11, à une température régnant dans la tête de placement et à tout autre paramètre utile au fonctionnement du dispositif 10.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Module de découpe (50) apte à découper un ruban (11) de fibres imprégnées d'une matrice, ledit module de découpe (50) comprenant un ensemble coupant (55) muni d'une lame (57), ledit ensemble coupant (55) étant mobile en translation selon une direction de coupe (D1), ledit module de découpe (50) comprenant une face martyre (60),
**caractérisé en ce que** ladite lame (57) et ladite face martyre (60) sont en regard l'une de l'autre selon ladite direction de coupe (D1), ladite lame (57) et ladite face martyre (60) étant agencée de part et d'autre et à distance d'un plan de passage (P1), ledit plan de passage (P1) étant destiné à contenir ledit ruban (11) lors d'une opération de dépose du ruban (11), ledit ensemble coupant (55) et ladite face martyre (60) étant conjointement ou alternativement mobiles en translation selon la direction de coupe (D1) et selon respectivement deux sens dit «sens de coupe (101, 102) » opposés pour couper le ruban de fibres imprégnées d'une matrice dans le plan de passage (P1) lors d'une phase de coupe, ledit ensemble coupant (55) et ladite face martyre (60) étant conjointement ou alternativement mobiles en translation selon la direction de coupe (D1) et selon respectivement deux sens dit « sens de retour (103, 104) » opposés pour s'éloigner dudit plan de passage (P1) suite à ladite coupe.

2. Module de découpe selon la revendication 1,
**caractérisé en ce que**, en dehors d'une dite phase de coupe, une distance (105) sépare selon ladite direction de coupe (D1) ladite lame (57) et ladite face martyre (60), ledit plan de passage (P1) passant au travers d'un espace séparant ladite lame (57) et ladite face martyre (60), ladite distance (105) étant supérieure ou égale à un centimètre.

3. Module de découpe selon l'une quelconque des revendications 1 à 2,
**caractérisé en ce que** ledit module de découpe (50) comporte un système de déplacement (51) pour déplacer ledit ensemble coupant (55) et ladite face martyre (60) selon lesdits sens de coupe (101, 102) et lesdits sens de retour (103, 104).

4. Module de découpe selon la revendication 3,
**caractérisé en ce que**, ledit ensemble coupant (55) et ladite face martyre (60) formant respectivement deux éléments (61, 62) mis en mouvement par le système de déplacement (51), ledit système de déplacement comporte un dispositif à crémaillère (65), le dispositif à crémaillère (65) comprenant une roue dentée (66) en prise sur une barre dentée (67), le dispositif à crémaillère (65) comprenant un actionneur pour mettre en mouvement la roue dentée et la barre dentée, un desdits éléments (61) étant solidaire en translation de la roue dentée (66) et un desdits éléments (62) étant solidaire en translation de la barre dentée (67).

5. Module de découpe selon la revendication 3,
**caractérisé en ce que** ledit système de déplacement (51) comporte deux actionneurs, un desdits deux actionneurs (70) déplaçant en translation selon la direction de coupe (D1) uniquement ledit ensemble coupant (55), un desdits deux actionneurs (71) déplaçant en translation selon la direction de coupe (D1) uniquement la face martyre (60).

6. Module de découpe selon la revendication 3,
**caractérisé en ce que** ledit ensemble coupant (55) et ladite face martyre (60) formant respectivement deux éléments (61, 62) mis en mouvement par le système de déplacement (51), ledit système de déplacement comporte un système à poulie (75) et un actionneur (72), un desdits éléments dénommé « élément actif (61) » étant mobile en translation selon la direction de coupe (D1) sous l'action dudit actionneur (72) et l'autre élément étant dénommé « élément passif (62) », le système à poulie (75) comprenant un premier renvoi (73) et un deuxième renvoi (74) immobiles en translation disposés latéralement de part et d'autre d'un plan (P2) qui est orthogonal au plan de passage (P1) et qui passe par l'élément actif (61), le système à poulie (75) comprenant au moins une poulie mobile (76) qui est mobile en translation selon la direction de coupe (D1) et solidaire en translation selon la direction de coupe (D1) de l'élément passif (62), le système à poulie (75) comprenant une courroie (77), ladite courroie (77) passant successivement autour du premier renvoi (73) puis autour de chacune dite au moins une poulie (76) puis autour du deuxième renvoi (74) pour rejoindre une portion solidaire en translation de l'élément actif (61), ledit élément passif (62) étant agencé entre ladite courroie (77) et ledit plan de passage (P1) pour qu'une translation de l'élément actif (61) induise un déplacement de ladite courroie (77) générant une translation de l'élément passif (62).

7. Module de découpe selon la revendication 3,
**caractérisé en ce que** ledit ensemble coupant (55) et ladite face martyre (60) formant respectivement deux éléments (61, 62) mis en mouvement par le système de déplacement (51), ledit module de découpe (50) comprenant un support immobile (80) et un support mobile (82) qui est mobile en translation selon la direction de coupe (D1) par rapport au support immobile (80), ledit support mobile (82) comprenant un cadre mobile (83) s'étendant selon la direction de coupe (D1) d'un fond jusqu'à une platine supérieure (84), ledit fond comprenant un desdits éléments dit « élément inférieur (62) » et l'autre élément étant dit « élément supérieur (61) », ledit élément supérieur (61) étant mobile en translation selon la direction de coupe (D1) par rapport au support mobile (82) et étant agencé entre ledit fond et la platine supérieure (84), ledit système de déplacement (51) comportant un unique actionneur (86) qui présente une longueur variant entre une position étendue et une position rétractée (POS1), ledit actionneur (86) étant fixé à la platine supérieure (84) et à l'élément supérieur (61) pour qu'une extension dudit actionneur de la position rétractée (POS1) vers la position étendue (POS2) induise un déplacement de la lame (57) et de la face martyre (60) selon lesdits sens de coupe (101, 102) et pour qu'une rétraction dudit actionneur (86) de la position étendue (POS2) vers la position rétractée (POS1) induise un déplacement de la lame (57) et de la face martyre (60) selon lesdits sens de retour (103, 104).

8. Module de découpe selon la revendication 7,
**caractérisé en ce que** ledit module de découpe (50) comporte un moyen de guidage (89) guidant une translation du support mobile (82) par rapport au support immobile (80).

9. Module de découpe selon l'une quelconque des revendications 7 à 8,
**caractérisé en ce que** ledit module de découpe (50) comporte un système de guidage (90) guidant une translation de l'élément supérieur (61) par rapport support mobile (82).

10. Module de découpe selon l'une quelconque des revendications 7 à 9,
**caractérisé en ce que** ledit support immobile (80) comporte une butée supérieure (92), ledit élément supérieur (61) étant en butée contre ladite butée supérieure (92) lorsque ledit actionneur (86) est dans ladite position rétractée (POS1).

11. Module de découpe selon l'une quelconque des revendications 7 à 10,
**caractérisé en ce que** ledit support immobile (80) comporte une butée inférieure (93), ledit élément supérieur (61) étant en butée contre ladite butée inférieure (93) lorsque ledit actionneur (86) est dans ladite position étendue (POS2).

12. Module de découpe selon l'une quelconque des revendications 7 à 11,
**caractérisé en ce que** ledit module de découpe (50) comporte au moins un ressort (87) agencé entre ladite platine supérieure (84) et ledit support immobile (80).

13. Module de découpe selon l'une quelconque des revendications 1 à 12,
**caractérisé en ce que** ledit module de découpe (50) comporte un guide (94) solidaire de la face martyre (60) pour positionner transversalement ledit ruban (11) lors de la coupe selon une direction transversale (D2) orthogonale à la direction de coupe (D1).

14. Module de découpe selon la revendication 13,
**caractérisé en ce que** ledit guide (94) comporte au moins une fente (95), ladite lame (57) coulissant dans ladite fente (95).

15. Module de découpe selon l'une quelconque des revendications 1 à 14,
**caractérisé en ce que** ledit module de découpe (50) comporte une buse (96) soufflant un fluide à température contrôlée sous le ruban (11).

16. Tête de placement (20) destinée à placer un ruban (11) de fibres imprégnées d'une matrice sur un support (2),
**caractérisée en ce que** ladite tête de placement (20) comporte un module de découpe (50) selon l'une quelconque des revendications 1 à 15.

17. Système de placement (10) muni d'une tête de placement (20), d'un dispositif de déplacement (15) et d'un moyen de contrôle (16) dudit dispositif de déplacement (15) et de ladite tête de placement (20),
**caractérisé en ce que** ladite tête de placement (20) est selon la revendication 16.

18. Procédé pour découper un ruban (11) de fibres imprégnées d'une matrice suite à une opération de dépose dudit ruban (11) sur un support (2),
**caractérisé en ce que** le procédé comporte les étapes de :
- déplacement conjoint ou alternatif d'une lame (57) et d'une face martyre (60) selon deux sens de coupe (101, 102) opposés pour atteindre un plan de passage (P1), ledit ruban (11) étant agencé dans ledit plan de passage (P1) durant l'opération de dépose,
- coupe du ruban (11) dans ledit plan de passage (P1) par ladite lame (57) et ladite face martyre (60),
- déplacement conjoint ou alternatif de ladite lame (57) et de la face martyre (60) selon deux sens de retour (103, 104) opposés pour s'éloigner dudit plan de passage (P1).
